# EUROPEAN PATENT APPLICATION

(11) **EP 4 039 469 A1**
(43) Date of publication of application: **10.08.2022**
(21) Application number: 19941984.7
(22) Date of filing: 25.09.2019
(51) Int. Cl.: B32B 27/06, B32B 33/00, C08L 27/06, C08K 13/02, C08J 9/12, E04F 15/10

(54) **CO-EXTRUSION SPC FOAM FLOORING AND MANUFACTURING METHOD THEREFOR**

(30) Priority: 16.08.2019 CN 201910757502
(71) Applicant: Flooring Industries Limited, SARL, 8070 Bertrange (LU)
(72) Inventor: SONG, Jiangang, Huzhou, Zhejiang 313301 (CN); FU, Jiajin, Huzhou, Zhejiang 313301 (CN); LIU, Fuqing, Huzhou, Zhejiang 313301 (CN)
(74) Representative: Valea AB
(86) International application number: PCT/CN2019/107717
(87) International publication number: WO 2021/031289

(57) **Abstract**

The present disclosure relates to a foam flooring, in particular to an SPC foam flooring and a manufacturing method thereof. The SPC foam flooring may include a stone-plastic base material structure, wherein the stone-plastic base material structure includes a first stable layer (4), a foaming layer (5), and a second stable layer (6) successively from top to bottom. The first stable layer (4) and the second stable layer (6) may be sheets including PVC resin and filler powder as main components; wherein the sheet includes 100 parts by mass of the PVC resin and 200-300 parts by mass of the filler powder. A density of the SPC foam flooring may be within a range of 1.4 g/cm³ to 1.6 g/cm³. Since the foaming layer is disposed inside, a surface strength of the flooring may not be influenced. In addition, dimensional stability of the flooring may be significantly improved.

## Description

### TECHNICAL FIELD

The present disclosure relates to foam flooring, and in particular, to stone-plastic (SPC) foam flooring and manufacturing methods thereof.

### BACKGROUND

With the continuous development of PVC floorings, the PVC floorings have gradually become substitutes for traditional paving building materials, such as solid wood floorings, ceramic tiles, strengthening floorings, etc. Experts expect that, in the next few years, plastic floorings may be accepted by Chinese people and become common flooring decoration materials for family decoration. With the rapid development of real estate, for high-rise civilian home decoration, commercial decoration, etc., the floor load-bearing of the flooring material has become a new requirement, and also put forward higher requirements for PVC floor products.

### SUMMARY

### TECHNICAL PROBLEMS

A density of a traditional SPC stone-plastic flooring is within a range of 1900 kilograms per cubic meter (kg/m³) to 2000 kg/m³. Due to the high density of the SPC flooring, the weight per unit area may be increased during a process of decoration, and the cost of transportation may be increased.

### SOLUTIONS OF TECHNICAL PROBLEMS

### TECHNICAL SOLUTIONS

To solve the above problems, the present disclosure provides an SPC foam flooring. Compared with the traditional SPC flooring, the SPC foam flooring may be about 20-30% lighter. In addition, the SPC foam flooring may have a good performance in dimensional stability.

Technical solutions of the present disclosure to solve the above problems may be as follows.

A co-extrusion SPC foam flooring may include a stone-plastic base material structure. The stone-plastic base material structure may include a first stable layer, a foaming layer, and a second stable layer successively from top to bottom. Each of the first stable layer and the second stable layer may be a sheet including polyvinyl chloride (PVC) resin and filler powder as main components; wherein the sheet includes 100 parts by mass of the PVC resin and 200-300 parts by mass of the filler powder. A density of the co-extrusion SPC foam flooring may be within a range of 1.4 grams per cubic centimeter (g/cm³) to 1.6 g/cm3.

In some embodiments, a thickness of the first stable layer may be within a range of 1 millimeter to 5 millimeters, a thickness of the foaming layer may be within a range of 2 millimeters to 10 millimeters, and a thickness of the second stable layer may be within a range of 1 millimeter to 5 millimeters.

In some embodiments, the filler powder may be calcium carbonate or a mixture including the calcium carbonate and at least one of light calcium carbonate, glass fiber, or carbon fiber.

In some embodiments, the first stable layer and the second stable layer may further include an additive. The additive may be selected from at least one of calcium-zinc stabilizer, an internal lubricating agent, polyethylene wax, chlorinated polyethylene, acrylic ester, a composite lubricating agent, or a coloring agent.

In some embodiments, when the foaming layer is a chemical foaming layer, the first stable layer and the second stable layer may include 100 parts by mass of PVC resin powder, 200-300 parts by mass of calcium carbonate, 4-7 parts by mass of calcium-zinc stabilizer, 0.8-1.3 parts by mass of an internal lubricating agent, 0.8-1.5 parts by mass of polyethylene wax, 4-6 parts by mass of chlorinated polyethylene, 2-5 parts by mass of acrylic ester, 1.0-1.5 parts by mass of a composite lubricating agent, and 0.4-0.6 parts by mass of a coloring agent.

In some embodiments, when the foaming layer is a physical foaming layer, the first stable layer and the second stable layer may include 100 parts by mass of PVC resin powder, 250-270 parts by mass of calcium carbonate, 5-6 parts by mass of calcium-zinc stabilizer, 1.0-1.2 parts by mass of an internal lubricating agent, 1.3-1.5 parts by mass of polyethylene wax, 5-6 parts by mass of chlorinated polyethylene, 2-3 parts by mass of acrylic ester, 1.1-1.3 parts by mass of a composite lubricating agent, and 0.4-0.5 parts by mass of a coloring agent.

A lubricating agent may include an internal lubricating agent and an external lubricating agent. A main function of the external lubricating agent may be to improve the friction between a melt of polymer and a surface of hot metal of a processing device. The external lubricating agent may have poor compatibility with the polymer and be easy to migrate from the melt, so that the external lubricating agent may form a lubricating thin layer at an interface surface between the plastic melt and the metal. The internal lubricating agent may have good compatibility with the polymer. The internal lubricating agent may reduce a cohesive force of polymer molecules inside the polymer, thereby improving internal frictional heat generated by the plastic melt and the fluidity of the melt. Since the external lubricating agent is easy to migrate from the melt, the plastic melt may be easy to be separated from the mold after molding, so the external lubricating agent is also referred to as a mold release agent. However, the internal lubricating agent and the external lubricating agent may not be absolute. A transformation between the internal lubricating agent and the external lubricating agent may occur depending on properties of the melt. Taking common lubricating agents (e.g., polyethylene wax and stearic acid) as an example, when used in polyethylene resin, the polyethylene wax has a better compatibility than the stearic acid, and is left inside the resin as an internal lubricating agent. When used in PVC resin, the stearic acid has a good compatibility, and is left inside the resin as an internal lubricating agent; while the polyethylene wax has a poor compatibility, and is migrated out of the resin as an external lubricating agent.

The composite lubricating agent usually refers to polyol lipids. For example, the composite lubricating agent may include the polyol lipids that is generated by processing caprylic acid, capric acid, lauric acid, palmtic acid, oleic acid, stearic acid, arachidic acid, adipic acid, decanedioic acid, etc., through esterification, alcoholysis, transesterification, etc., or polymer composite alcohol-ester products formed by multiple esterification and compounding. In such lubricating agent, the products of polyol lipids may be partial esterification of polyhydric alcohols. That is, unreacted hydroxyl groups may be in ester. The polar hydroxyl groups often give the products a good antistatic effect. Therefore, the composite lubricating agent may also be an antistatic agent in processing of PVC. Pentaerythritol fatty ester may be a mixture including monoester, diester, triester, and quadester, which has a good function of internal lubrication. Due to different extents of reaction of the products, with the increase of the number of the hydroxyl groups, the internal lubrication of the composite lubricating agent may be transferred to the external lubrication.

In some embodiments, the foaming layer may be a chemical foaming layer. The foaming layer may include 100 parts by mass of PVC resin powder, 150-200 parts by mass of calcium carbonate, 4-7 parts by mass of calcium-zinc stabilizer, 0.6-1.2 parts by mass of a foaming agent, 0.5-0.9 parts by mass of polyethylene wax, 2-3 parts by mass of chlorinated PVC, 2-3 parts by mass of acrylic ester, 0.3-0.8 parts by mass of a lubricating agent, and 6-9 parts by mass of a foaming regulator.

In some embodiments, when the foaming layer includes a coloring agent, an addition amount of the coloring agent in the foaming layer may be within a range of 0.3 to 0.5 parts by mass.

In some embodiments, the foaming layer may be a physical foaming layer. The foaming layer may include 100 parts by mass of PVC resin powder, 300-330 parts by mass of calcium carbonate, 4-7 parts by mass of calcium-zinc stabilizer, 1-1.5 parts by mass of an internal lubricating agent, 1-1.5 parts by mass of polyethylene wax, 4-8 parts by mass of chlorinated polyethylene, 3-5 parts by mass of acrylic ester, and 0.7-1.2 parts by mass of a composite lubricating agent.

In some embodiments, when the foaming layer includes a coloring agent, an addition amount of the coloring agent in the foaming layer may be within a range of 0.4 to 0.6 parts by mass.

In some embodiments, the co-extrusion SPC foam flooring may further include a decorative protection structure. The decorative protection structure may include an ultraviolet (UV) coating layer, a wear-resistant layer, and a decorative layer successively from top to bottom.

In some embodiments, a thickness of the UV coating layer may be within a range of 30 microns to 150 microns, and a thickness of the wear-resistant layer may be within a range of 0.1 millimeters to 1.0 millimeter.

In some embodiments, the wear-resistant layer may include PVC resin and vinyl resin as main components, and be added appropriate plasticizer, a lubricating agent, stabilizer through blow molding, calendaring, or stretching.

In some embodiments, the decorative layer may be a PVC film with patterns or logos on a surface of the PVC film.

In another aspect of the present disclosure, a method for manufacturing a co-extrusion SPC foam flooring is provided.

The method may include following operations.
a. Raw materials of the first stable layer and the second stable layer may be added into a high-speed mixer for mixing and heating, the raw materials of the first stable layer and the second stable layer may be cooled down through a low-speed mixer, and materials may be extruded through an extruder A.
b. Raw materials of the foaming layer may be added into the high-speed mixer for mixing and heating, the raw materials of the foaming layer may be cooled down through the low-speed mixer, and the raw materials of the foaming layer may be made into an extruder B. When the foaming layer is chemically foamed, the raw materials of the foaming layer may be evenly melted, plasticized, and extruded through the extruder B. When the foaming layer is physically foamed, the raw materials of the foaming layer may be evenly melted and plasticized through the extruder B, and simultaneously, high-pressure liquefied carbon dioxide (CO₂) within a range of 4 wt% to 10 wt% may be injected into a foaming agent injection device. A high pressure of a mold chamber may be maintained to keep the CO₂ in a liquid state, so that the CO₂ may be fully mixed with the raw materials of the foaming layer. The pressure of the mold chamber may be released during a process of extrusion.
c. The stone-plastic base material structure may be obtained by making the materials extruded through the extruder A into a mold runner allocator, converging the materials extruded through the extruder A and the materials extruded through the extruder B at a mold head, and co-extruding converged materials through a mold aperture of the mold head.
d. Shadings may be pressed on the stone-plastic base material structure by making the stone-plastic base material structure pass through a space between a shading roller and a first mirror surface roller, the stone-plastic base material structure may be transferred to a space between a second mirror surface roller and an embossing roller, the wear-resistant layer and a decorative paper may be transferred to a space between the second mirror surface roller and an air-exhausting roller through a servo film feeding roller of the wear-resistant layer and a servo film feeding roller of the decorative layer, respectively, to pre-laminate the wear-resistant layer and the decorative paper, and the wear-resistant layer and the decorative layer may be obtained, through a cooperation of the second mirror surface roller and the embossing roller, by pressing the wear-resistant layer and the decorative paper on the stone-plastic base material structure. A surface pattern with a concave-convex stereo effect may be on a front surface of the co-extrusion SPC foam flooring may be formed.

### BENEFICIAL EFFECTS OF THE PRESENT DISCLOSURE

### BENEFICIAL EFFECTS

The present disclosure may have following beneficial effects.

According to the present disclosure, a foaming layer may be disposed between two stable layers, which may significantly reduce an overall density of the flooring. The density may be within a range of 1.4 g/m³ to 1.6 g/m³. Since the foaming layer is disposed inside, a surface strength of the overall flooring may not be reduced, and a sound-absorbing performance of the overall flooring may be improved. In addition, dimensional stability of the flooring in the present disclosure may be significantly improved.

### BRIEF DESCRIPTION OF THE DRAWINGS

### DESCRIPTION OF THE DRAWINGS

FIG. 1 is a schematic diagram illustrating a structure of an SPC foam flooring according to some embodiments of the present disclosure;
FIG. 2 is a schematic diagram illustrating a device according to some embodiments of the present disclosure; and

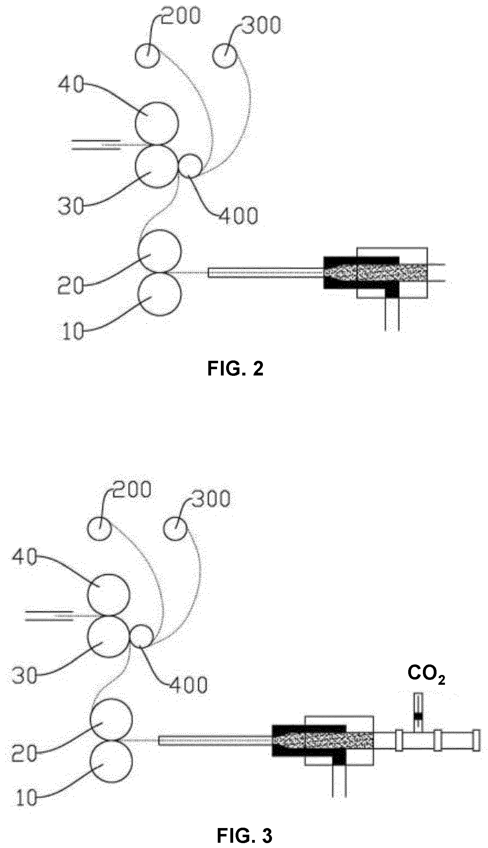

FIG. 2 is a schematic diagram illustrating a device according to some embodiments of the present disclosure.

In figures, 1 represents a UV coating layer, 2 represents a wear-resistant layer, 3 represents a decorative layer, 4 represents a first stable layer, 5 represents a foaming layer, 6 represents a second stable layer, 10 represents a shading roller, 20 represents a first mirror surface roller, 30 represents a second mirror surface roller, 40 represents an embossing roller, 200 represents a servo film feeding roller of the wear-resistant layer, 300 represents a servo film feeding roller of the decorative layer, and 400 represents an air-exhausting roller.

### DETAILED DESCRIPTION

### EMBODIMENTS OF THE PRESENT DISCLOSURE

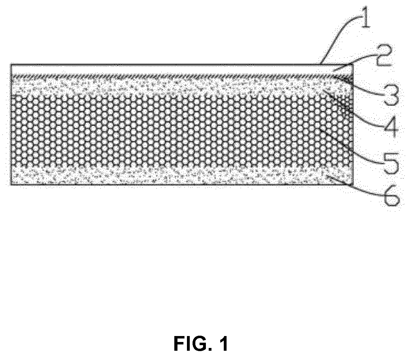

As shown in FIG. 1, an SPC foam flooring may include a decorative protection structure and a stone-plastic base material structure.

The decorative protection structure may include a UV coating layer 1, a wear-resistant layer 2, and a decorative layer 3 successively from top to bottom. The stone-plastic base material structure may include a first stable layer 4, a foaming layer 5, and a second stable layer 6 successively from top to bottom. A density of the SPC foam flooring may be 1.531 g/cm³.

In some embodiments, a thickness of the UV coating layer 1 may be 100 microns.

The wear-resistant layer 2 may include PVC resin as main components, and be added appropriate plasticizer, a lubricating agent, stabilizer through blow molding, calendaring, or stretching. A thickness of the wear-resistant layer 2 may be 0.3 millimeters.

The decorative layer 3 may be a PVC film with a pattern on a surface. A thickness of the decorative layer 3 may be 0.07 millimeters.

Each of the first stable layer 4 and the second stable layer 6 may be a sheet including PVC resin and filler powder as main components; wherein the sheet may include 100 parts by mass of the PVC resin and 250 parts by mass of the filler powder (e.g., calcium carbonate). The sheet may further include an additive. The additive may include following components:
5 parts by mass of calcium-zinc stabilizer
1.0 part by mass of an internal lubricating agent
1.4 parts by mass of polyethylene wax
5 parts by mass of chloride polyethylene
2 parts by mass of acrylic ester
1.1 parts by mass of a composite lubricating agent
0.5 parts by mass of a coloring agent

The above additive may be conventional auxiliaries in the field, which are not repeated.

The foaming layer 5 may be a chemical foaming layer. The foaming layer 5 may include following components:
100 parts by mass of PVC resin powder
160 parts by mass of calcium carbonate
6 parts by mass of calcium-zinc stabilizer
0.8 parts by mass of a foaming agent
0.6 parts by mass of polyethylene wax
2 parts by mass of chloride PVC
2 parts by mass of acrylic ester
0.5 parts by mass of a lubricating agent
7 parts by mass of a foaming regulator
0.5 parts by mass of a coloring agent

The above additive may be conventional auxiliaries in the field, which are not repeated.

As shown in FIG. 2, a method for manufacturing the SPC foam flooring in some embodiments may include following operations.
a. Raw materials of the first stable layer 4 and the second stable layer 6 may be added into a high-speed mixer for mixing and heating, the raw materials of the first stable layer 4 and the second stable layer 6 may be cooled down through a low-speed mixer, and materials may be extruded through an extruder A.
b. Raw materials of the foaming layer 5 may be added into the high-speed mixer for mixing and heating, the raw materials of the foaming layer 5 may be cooled down through the low-speed mixer, and materials may be extruded through an extruder B.
c. The stone-plastic base material structure may be obtained by making the materials extruded through the extruder A into a mold runner allocator, converging the materials extruded through the extruder A and the materials extruded through the extruder B at a mold head, and co-extruding the converged materials through a mold aperture of the mold head.
d. Shadings may be pressed on the stone-plastic base material structure by making the stone-plastic base material structure pass through a space between a shading roller 10 and a first mirror surface roller 20, the stone-plastic base material structure may be transferred to a space between a second mirror surface roller 30 and an embossing roller 40, the wear-resistant layer and a decorative paper may be transferred to a space between the second mirror surface roller 30 and an air-exhausting roller 400 through a servo film feeding roller 200 of the wear-resistant layer and a servo film feeding roller 300 of the decorative layer, respectively, to pre-laminate the wear-resistant layer and the decorative paper, and the wear-resistant layer and the decorative layer may be obtained, through a cooperation of the second mirror surface roller 30 and the embossing roller 40, by pressing the wear-resistant layer 2 and the decorative paper 3 on the stone-plastic base material structure. A surface pattern with a concave-convex stereo effect may be on a front surface of the SPC foam flooring.

Comparisons between tested performances of some embodiments of the preset disclosure and tested performances of a conventional stone-plastic floor (unfoamed) may be shown in the following table.

| Testing objects | Testing standard | Testing results | |
|---|---|---|---|
| | | Co-extrusion ABA stone-plastic flooring | ABA stone-plastic foam flooring (Best Embodiment) |
| Change of Heating size | ISO 23999 | 0.13% | 0.08% |
| Heating warping | ISO 23999 | 0.77 millimeters | 0.30 millimeters |
| Density | ISO 23996 | 1.984 g/cm³ | 1.531 g/cm³ |

### EMBODIMENTS

### EMBODIMENTS OF THE PRESENT DISCLOSURE

As shown in FIG. 1, a co-extrusion SPC foam flooring may include a decorative protection structure and a stone-plastic base material structure.

The decorative protection structure may include a UV coating layer 1, a wear-resistant layer 2, and a decorative layer 3 successively from top to bottom. The stone-plastic base material structure may include a first stable layer 4, a foaming layer 5, and a second stable layer 6 successively from top to bottom. A density of the co-extrusion SPC foam flooring may be 1.465 g/cm³.

In some embodiments, a thickness of the UV coating layer 1 may be 100 microns.

The wear-resistant layer 2 may include PVC resin as main components, and be added appropriate plasticizer, a lubricating agent, stabilizer through blow molding, calendaring, or stretching. A thickness of the wear-resistant layer 2 may be 0.3 millimeters.

The decorative layer 3 may be a PVC film with a pattern on a surface. A thickness of the decorative layer 3 may be 0.07 millimeters.

Each of the first stable layer 4 and the second stable layer 6 may be a sheet including PVC resin and filler powder as main components; wherein the sheet may include 100 parts by mass of the PVC resin and 250 parts by mass of the filler powder (e.g., calcium carbonate). The sheet may further include an additive. The additive may include following components:
5 parts by mass of calcium-zinc stabilizer
1.0 part by mass of an internal lubricating agent
1.4 parts by mass of polyethylene wax
5 parts by mass of chloride polyethylene
2 parts by mass of acrylic ester
1.1 parts by mass of a composite lubricating agent
0.5 parts by mass of a coloring agent

The above additive may be conventional auxiliaries in the field, which are not repeated.

The foaming layer 5 may be a physical foaming layer. The foaming layer 5 may include following components:
100 parts by mass of PVC resin powder
330 parts by mass of calcium carbonate
5.5 parts by mass of calcium-zinc stabilizer
1.2 parts by mass of an internal lubricating agent
1 part by mass of polyethylene wax
5.5 parts by mass of chloride polyethylene
3 parts by mass of acrylic ester
1.0 part by mass of a composite lubricating agent

The above additive may be conventional auxiliaries in the field, which are not repeated.

As shown in FIG. 3, a method for manufacturing the SPC foam flooring in the embodiments may include following operations.
a. Raw materials of the first stable layer 4 and the second stable layer 6 may be added into a high-speed mixer for mixing and heating, the raw materials of the first stable layer 4 and the second stable layer 6 may be cooled down through a low-speed mixer, and materials may be extruded through an extruder A.
b. Raw materials of the foaming layer 5 may be added into the high-speed mixer for mixing and heating, the raw materials of the foaming layer 5 may be cooled down through the low-speed mixer, and the raw materials of the foaming layer 5 may be made into an extruder B. The raw materials of the foaming layer 5 may be evenly melted and plasticized through the extruder B, and simultaneously, 6 wt% of high-pressure liquefied CO₂ may be injected into a foaming agent injection device. A high pressure of a mold chamber may be maintained to keep the CO₂ in a liquid state, so that the CO₂ may be fully mixed with the raw materials of the foaming layer 5. The pressure of the mold chamber may be released during a process of extrusion.
c. The stone-plastic base material structure may be obtained by making the materials extruded through the extruder A into a mold runner allocator, converging the materials extruded through the extruder A and the materials extruded through the extruder B at a mold head, and co-extruding the converged materials through a mold aperture of the mold head.
d. Shadings may be pressed on the stone-plastic base material structure by making the stone-plastic base material structure pass through a space between a shading roller 10 and a first mirror surface roller 20, the stone-plastic base material structure may be transferred to a space between a second mirror surface roller 30 and an embossing roller 40, the wear-resistant layer and a decorative paper may be transferred to the second mirror surface roller 30 and an air-exhausting roller 400 through a servo film feeding roller 200 of the wear-resistant layer and a servo film feeding roller 300 of the decorative layer, respectively, to pre-laminate the wear-resistant layer and the decorative paper, and the wear-resistant layer 2 and the decorative layer 3 may be obtained, through a cooperation of the second mirror surface roller 30 and the embossing roller 40, by pressing the wear-resistant layer and the decorative paper on the stone-plastic base material structure. A surface pattern with a concave-convex stereo effect may be on a front surface of the co-extrusion SPC foam flooring.

## Claims

1. A co-extrusion stone-plastic (SPC) foam flooring, comprising a stone-plastic base material structure, wherein
the stone-plastic base material structure includes a first stable layer (4), a foaming layer (5), and a second stable layer (6) successively from top to bottom, each of the first stable layer (4) and the second stable layer (6) being a sheet including polyvinyl chloride (PVC) resin and filler powder as main components; wherein
the sheet includes 100 parts by mass of the PVC resin and 200-300 parts by mass of the filler powder; and
a density of the co-extrusion SPC foam flooring is within a range of 1.4 grams per cubic centimeter (g/cm³) to 1.6 g/cm³.

2. The co-extrusion SPC foam flooring of claim 1, wherein a thickness of the first stable layer (4) is within a range of 1 millimeter to 5 millimeters, a thickness of the foaming layer (5) is within a range of 2 millimeters to 10 millimeters, and a thickness of the second stable layer (6) is within a range of 1 millimeter to 5 millimeters.

3. The co-extrusion SPC foam flooring of claim 1, wherein the filler powder is calcium carbonate or a mixture including calcium carbonate and at least one of light calcium carbonate, glass fiber, or carbon fiber.

4. The co-extrusion SPC foam flooring of claim 1, wherein the first stable layer (4) and the second stable layer (6) further include an additive, the additive being selected from at least one of calcium-zinc stabilizer, an internal lubricating agent, polyethylene wax, chlorinated polyethylene, acrylic ester, a composite lubricating agent, or a coloring agent.

5. The co-extrusion SPC foam flooring of claim 1, wherein the foaming layer (5) is a chemical foaming layer, the foaming layer (5) including 100 parts by mass of PVC resin powder, 150-200 parts by mass of calcium carbonate, 4-7 parts by mass of calcium-zinc stabilizer, 0.6-1.2 parts by mass of a foaming agent, 0.5-0.9 parts by mass of polyethylene wax, 2-3 parts by mass of chlorinated PVC, 2-3 parts by mass of acrylic ester, 0.3-0.8 parts by mass of a lubricating agent, and 6-9 parts by mass of a foaming regulator.

6. The co-extrusion SPC foam flooring of claim 5, wherein when the foaming layer (5) includes a coloring agent, an addition amount of the coloring agent in the foaming layer (5) is within a range of 0.3 to 0.5 parts by mass.

7. The co-extrusion SPC foam flooring of claim 1, wherein the foaming layer (5) is a physical foaming layer, the foaming layer (5) including 100 parts by mass of PVC resin powder, 300-330 parts by mass of calcium carbonate, 4-7 parts by mass of calcium-zinc stabilizer, 1-1.5 parts by mass of an internal lubricating agent, 1-1.5 parts by mass of polyethylene wax, 4-8 parts by mass of chlorinated polyethylene, 3-5 parts by mass of acrylic ester, and 0.7-1.2 parts by mass of a composite lubricating agent.

8. The co-extrusion SPC foam flooring of claim 7, wherein when the foaming layer (5) includes a coloring agent, an addition amount of the coloring agent in the foaming layer (5) is within a range of 0.4 to 0.6 parts by mass.

9. The co-extrusion SPC foam flooring of claim 1, wherein the co-extrusion SPC foam flooring further includes a decorative protection structure, the decorative protection structure including an ultraviolet (UV) coating layer (1), a wear-resistant layer (2), and a decorative layer (3) successively from top to bottom.

10. A method for manufacturing the co-extrusion SPC foam flooring of claim 9, comprising:
a. adding raw materials of the first stable layer (4) and the second stable layer (6) into a high-speed mixer for mixing and heating, cooling down the raw materials of the first stable layer (4) and the second stable layer (6) through a low-speed mixer, and extruding materials through an extruder A;
b. adding raw materials of the foaming layer (5) into the high-speed mixer for mixing and heating, cooling down the raw materials of the foaming layer (5) through the low-speed mixer, and making the raw materials of the foaming layer (5) into an extruder B, wherein
when the foaming layer (5) is chemically foamed, the raw materials of the foaming layer (5) are evenly melted, plasticized, and extruded through the extruder B; or
when the foaming layer (5) is physically foamed, the raw materials of the foaming layer (5) are evenly melted and plasticized through the extruder B, and simultaneously, high-pressure liquefied carbon dioxide (CO₂) within a range of 4 wt% to 10 wt% is injected into a foaming agent injection device, a high pressure of a mold chamber being maintained to keep the CO₂ in a liquid state so that the CO₂ is fully mixed with the raw materials of the foaming layer (5), the pressure of the mold chamber being released during a process of extrusion;
c. obtaining the stone-plastic base material structure by making the materials extruded through the extruder A into a mold runner allocator, converging the materials extruded through the extruder A and the materials extruded through the extruder B at a mold head, and co-extruding the converged materials through a mold aperture of the mold head; and
d. pressing shadings on the stone-plastic base material structure by making the stone-plastic base material structure pass through a space between a shading roller (10) and a first mirror surface roller (20), transferring the stone-plastic base material structure to a space between a second mirror surface roller (30) and an embossing roller (40), transferring a wear-resistant layer and a decorative paper to a space between the second mirror surface roller (30) and an air-exhausting roller (400) through a servo film feeding roller (200) of the wear-resistant layer and a servo film feeding roller (300) of the decorative layer, respectively, to pre-laminate the wear-resistant layer and the decorative paper, and obtaining, through a cooperation of the second mirror surface roller (30) and the embossing roller (40), the wear-resistant layer (2) and the decorative layer (3) by pressing the wear-resistant layer and the decorative paper on the stone-plastic base material structure, and a surface pattern with a concave-convex stereo effect on a front surface of the co-extrusion SPC foam flooring.
